# EUROPÄISCHE PATENTSCHRIFT

(11) **EP 3 245 042 B1**
(45) Veröffentlichungstag und Bekanntmachung des Hinweises auf die Patenterteilung: **07.04.2021**
(21) Anmeldenummer: 16700354.0
(22) Anmeldetag: 12.01.2016
(51) Int. Cl.: B29C 64/153, B29C 64/188, B29C 64/393, B22F 3/105, B22F 3/16

(54) **VERFAHREN ZUR HERSTELLUNG VON DREIDIMENSIONALEN BAUTEILEN**
METHOD FOR PRODUCING THREE-DIMENSIONAL COMPONENTS
PROCÉDÉ DE FABRICATION DE PIÈCES TRIDIMENSIONNELLES

(30) Priorität: 14.01.2015 DE 102015000100
(43) Veröffentlichungstag der Anmeldung: 22.11.2017
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/EP2016/050472
(87) Internationale Veröffentlichungsnummer: WO 2016/113255

(56) Entgegenhaltungen:
- EP-A2- 2 832 475
- WO-A1-01/81031
- WO-A1-2004/056509
- WO-A1-2015/120047
- WO-A2-2012/019577
- WO-A2-2012/069037
- DE-A1- 19 905 067
- US-A1- 2013 277 891

## Beschreibung

Die Erfindung betrifft ein Verfahren zur Herstellung von dreidimensionalen Objekten durch aufeinanderfolgendes Verfestigen von Schichten eines pulverartigen, mittels elektromagnetischer Strahlung, insbesondere gebündelter Strahlung wie Laserstrahlung oder Elektronenstrahlung verfestigbaren Aufbaumaterials. Bei dem genannten Verfahren wird die Strahlung zum Aufschmelzen des Baumaterials an den dem jeweiligen Querschnitt der Objekte entsprechenden Stellen gerichtet. Dazu wird eine Vorrichtung mit einer innerhalb einer Baukammer höhenverlagerbaren Tragevorrichtung zum Tragen des Objektes vorgesehen, über eine Beschichtungsvorrichtung wird Aufbaumaterial Schicht für Schicht auf die Tragevorrichtung aufgebracht und dann jeweils gezielt aufgeschmolzen, nach Abkühlung erstarrt das Material zu einem festen dreidimensionalen Körper. Die Bestrahlungseinrichtung der für das Verfahren eingesetzten Vorrichtung umfasst einen Scanner, der prozessgesteuert die gebündelte Strahlung auf die zu verfestigenden Stellen der Baumaterialschicht richtet.

Generative Bauvorgänge, wie sie vorstehend beschrieben sind und bei denen Schicht für Schicht aufgetragen und verfestigt wird, ziehen sich oftmals über sehr lange Zeiträume hin. Nun kann es vorkommen, dass in einer relativ späten Phase des Bauvorganges Verfestigungs- oder Beschichtungsfehler auftreten, die dann zum Ausschuss des hergestellten dreidimensionalen Körpers führen, wenn der Bauvorgang ohne eingreifende Korrektur fortgesetzt und vollendet wird. Dies kann dazu führen, dass beispielsweise ein 24 Stunden Bauvorgang 23 Stunden ordnungsgemäß abläuft und in der letzten Stunde ein Beschichtungs- oder Verbindungsfehler der sich verfestigenden Schichten auftritt. Insbesondere Verbindungsfehler führen zu einer Delamination von Schichten, d.h. es lösen sich infolge einer unzureichenden Durchschmelzung Bereiche einer letzten Schicht ab, diese wölben sich insbesondere aus thermischen Gründen hoch, so dass ein erneuter Schichtauftrag zu einer für den ordnungsgemäßen Verlauf des Bauvorganges zu dünnen Schicht führt.

Aus DE 103 00 959 C5 ist es bekannt, einer Klingenanordnung des Baumaterialbeschichters eine Abscherklinge zuzuordnen, durch die hochstehende Teilchen aus einer zu beschichtenden Fläche abgetrennt werden können. Eine derartige Abscherklinge ist allerdings nur dazu geeignet, aus der zu beschichtenden Fläche hochstehende, aus Materialspritzern resultierende Teilchen abzutragen oder umzulegen, so dass sie den nachfolgenden Beschichtungsvorgang nicht stören können.

Grundsätzlich ist es auch aus DE 198 53 978 C1 bekannt, zur Vermeidung von Verschleiß einer Beschichterklinge eine Schleifeinrichtung vorzusehen, mit der die Bearbeitungsfläche des im Aufbauvolumen befindlichen Formkörpers vollflächig geglättet werden kann.

DE 199 50 067 A1 offenbart eine Vorrichtung zur Herstellung eines Formkörpers durch schichtweises Aufbauen aus pulverförmigem Metall mit einer Nivellier- und Glättungseinrichtung.

Der Erfindung liegt die Aufgabe zugrunde, ein Verfahren mit den Merkmalen des Oberbegriffs des Anspruches 1 derart auszubilden, dass es schnell, mit möglichst wenig Beeinflussung der Bauraumatmosphäre durchgeführt werden kann und ein Abtrag gezielt durchgeführt werden kann. Diese Aufgabe wird durch ein Verfahren gemäß Anspruch 1 gelöst.

Das Verfahren sieht damit zunächst vor, regelmäßig, d.h. nach jedem Schichtauftrag oder nach jedem zweiten, dritten, vierten Schichtauftrag zu kontrollieren, ob die zu beschichtenden Flächen tatsächlich eben sind. Beim Stand der Technik wird - wie oben beschrieben - eine Glättungsaktion vor jedem Beschichtungsvorgang durchgeführt, ob diese nun notwendig ist oder nicht. Dies führt zu einer nicht unerheblichen Verschmutzung des Baubereiches und ist deswegen als negativ anzusehen. Die Erfindung hingegen prüft gezielt, ob eine Glättung oder ein Abtrag von zu beschichtenden Bereichen überhaupt erforderlich ist. Nur dann, wenn eine gewisse Toleranzüberschreitung festgestellt wird, wird ein Glättungs- oder Abtragvorgang eingeleitet, ansonsten wird beschichtet, ohne dass eine Glättungsaktion in die Wege geleitet wird.

Erfindungsgemäß werden festgestellte Unebenheiten lokal erfasst und wird ganz gezielt und lokal begrenzt ein Abtrageelement eingesetzt, um einen nächsten gleichmäßigen Schichtauftrag behindernde Unebenheiten abzutragen oder zu glätten. Dabei werden Unebenheitskoordinaten mit einem Sensor erfasst und abgespeichert und unter Verwendung dieser ermittelten Unebenheitskoordinaten gezielte Abtragemaßnahmen in die Wege geleitet.

Im Gegensatz zu den Verfahren beim Stand der Technik, wo quasi ein Überschleifen oder Abtragen der gesamten Schicht vor jedem erneuten Baumaterialschichtauftrag erfolgt, wird nach dem erfindungsgemäßen Verfahren zunächst einmal überprüft, ob und wo überhaupt eine mechanische oder auf sonstige Weise glättende Überarbeitung der Schicht erforderlich ist. Wird dies nach Durchführung des ersten Schrittes bejaht, dann wird gezielt unter Verwendung von Fehlstellenkoordinaten ein Abtragevorgang gestartet. Dies bedeutet, dass ein erfindungsgemäßes Verfahren weit schneller ablaufen kann, als beim Stand der Technik, weil nicht jedes Mal geschliffen oder auf sonstige Weise abgetragen werden muss, sondern immer nur dann, wenn wirklich eine Fehlstelle festgestellt wird. Auch kann die Schicht nicht über den gesamten Schichtbereich überarbeitet werden, sondern nur dort, wo eine Fehlstelle festgestellt wird. Dies schont die Bauraumatmosphäre, da bei jedem Schichtabtrag zu befürchten ist, dass Baumaterial-Partikel beispielsweise durch ein Schleifelement in die Schutzgasatmosphäre des Bauraumes hochgeschleudert werden und dort die Atmosphäre kontaminieren. Außerdem werden mechanische oder thermische Belastungen des sich im Bau befindlichen Körpers weitgehend vermieden, weil nur dort mechanisch bearbeitet wird, wo es wirklich notwendig ist und nicht immer eine insgesamte Beschleifung der Fläche erfolgt.

Die Abtastung der zu beschichtenden Fläche kann optisch erfolgen, z.B. mit einem optischen Scanner, der in der Lage ist, hochstehende Teile, wie z.B. eine Delamination, zu erkennen und zu lokalisieren. Die Koordinaten dieses hochstehenden Bereiches werden genau erfasst und dann genau dort und gezielt ein Überarbeitungsvorgang gestartet. Die Abtastung der Fläche kann aber auch durch ein akustisches Verfahren, z.B. mit einem Ultraschallsensor erfolgen, der in der Lage ist, genau den Abstand zwischen Sensorhöhe und Schicht zu ermitteln. Erfasste Unebenheiten werden lokalisiert mechanisch abgetragen. Lokalisiert in diesem Zusammenhang bedeutet, dass z.B. über einen Roboterarm oder dergleichen ein relativ kleinflächiges Abtrageelement zur hochstehenden Schichtstelle geführt wird und dort der Abtragevorgang vorgenommen wird. Alle anderen Schichtbereiche, die nicht fehlerhaft sind, bleiben von dem Abtragevorgang unbeeinflusst. Der mechanische Abtrag kann durch eine Schleifwalze erfolgen, die z.B. am freien beweglichen Ende des Roboterarms angeordnet ist, wobei auch eine ganz gezielte Absaugung von Schleifpartikeln erfolgen kann.

Die Abtastung der zu beschichtenden Oberfläche kann vor jedem Beschichtungsvorgang erfolgen. Um das Verfahren weiter zu beschleunigen, kann es auch ausreichend sein, die Abtastung der zu beschichtenden Flächen nur im Rand- oder Extrembereich eines entstehenden Bauteils vorzunehmen. Als Extrembereich werden z.B. von einer Bauteilwandung abstehende Rippen oder sonstige relativ schlanke Vorsprünge angesehen, die bei einem Bauvorgang relativ leicht zu einer Delamination neigen.

Weiterhin kann es vorteilhaft sein, mit der Abtastvorrichtung eine lokale Nachprüfung von Schichtoberflächenbereichen durchzuführen, die sich bei vorherigen Abtragevorgängen als kritisch herausgestellt haben. Mit anderen Worten wird nach einem erneuten Beschichtungs- und Aufschmelzungsvorgang gegebenenfalls nicht die ganze Bauteilschicht überprüft, sondern nur ein Bauteilschichtbereich, der bei einem der vorhergehenden Beschichtungs- und Aufschmelzungsvorgängen zu einer Delamination geneigt hat. Auch dies beschleunigt das Verfahren.

Mit besonderem Vorteil ist es möglich, über die Ergebnisse der Detektion und die Überarbeitungen "Buch zu führen", d.h. die festgestellten Unebenheiten hinsichtlich ihrer X- und Y-Koordinaten in einem Qualitätsmanagementprotokoll festzuhalten. Dabei kann es auch zweckdienlich sein, nicht nur die Koordinaten einer Schichtstelle zu protokollieren, die zu überarbeiten war, sondern auch die Abtragtiefe oder die Art des Abtragvorganges und/oder die Abtragfläche mit festzuhalten, damit nach Fertigstellung des Bauteils abgewogen werden kann, ob der Überarbeitungsvorgang negative Auswirkungen auf die Qualität des fertiggestellten Bauteils haben kann.

Die Erfindung ist anhand vorteilhafter Ausführungsbeispiele in den Zeichnungsfiguren näher erläutert. Diese zeigen
- Fig. 1: eine schematische Darstellung einer Vorrichtung, in der das erfindungsgemäße Verfahren durchgeführt werden kann;
- Fig. 2: einen schematischen Ablauf zur Durchführung des Qualitätsmanagements einer zu beschichtenden Oberfläche.

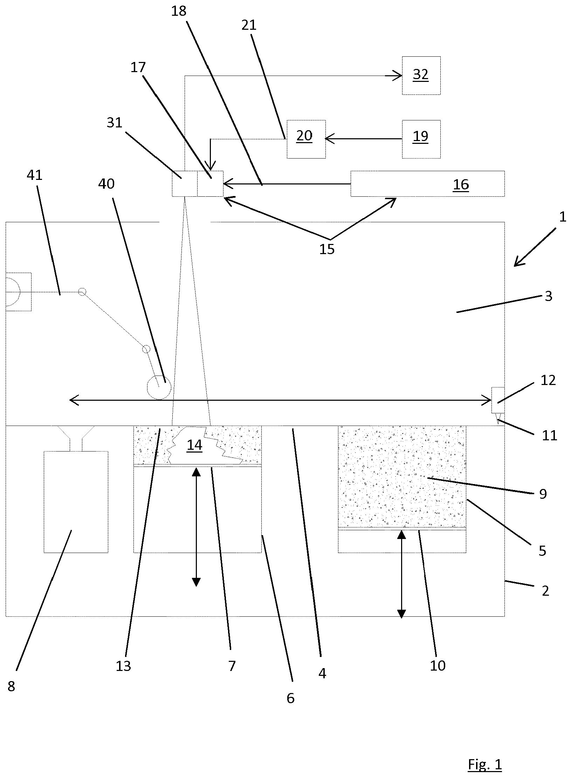

Die in Figur 1 dargestellte Vorrichtung 1 umfasst ein Gehäuse 2, in welchem eine Prozesskammer 3 untergebracht ist. In einen Prozesskammerboden 4 sind ein Vorratsbehälter 5 für insbesondere pulverartiges Baumaterial, eine Baukammer 6 mit einem höhenverstellbaren Träger 7 und ein Überlaufbehälter 8 angeordnet. Das Baumaterial 9 wird durch einen höhenverstellbaren Dosierkammerboden 10 etwas nach oben gedrückt und kann durch die Klinge 11 eines horizontal verfahrbaren Beschichters 12 auf eine zu beschichtende Oberfläche 13 eines teilfertigen Bauteils 14 aufgebracht werden. Überschüssiges Baumaterial wird in den Überlaufbehälter 8 abgeworfen.

Oberhalb der Prozesskammer 3 oder im oberen Bereich derselben ist eine Bestrahlungseinrichtung 15, bestehend aus einem Laser 16 und einem Scanner 17 angeordnet. Der hochenergetische Strahl 18 des Lasers 16 wird in den Scanner 17 geleitet und dort in X- und Y-Richtung abgelenkt, um gezielt eine Pulverschicht auf der Oberfläche des Bauteils 14 zu bestrahlen und damit zu verfestigen. Der Scanner 17 wird durch Baudaten gesteuert, die in einem Speicher 19 gespeichert sind und in einem Prozessor 20 so verarbeitet werden, dass ein Prozessorausgang 21 einen Scannereingang mit Scannerinformation bedienen kann.

Über der Baukammer 6 ist darüber hinaus ein Sensor 31 angeordnet, der dazu geeignet und ausgebildet ist, die zu beschichtende Oberfläche 13 insbesondere des Bauteils 14 vor einem Beschichtungsvorgang durch den Beschichter 12 hinsichtlich seiner Ebenheit abzutasten. Die Abtastung kann derart erfolgen, dass entweder der Sensor 31 als optischer Sensor ausgebildet ist, der entweder selbst einen Sensorstrahl aussendet und die von der Oberfläche zurückgeworfene Information analysiert oder dazu den Strahl des Scanners verwendet. In jedem Fall ist erforderlich, dass der Sensor 31 geeignet ist, Unebenheitskoordinaten bei dem Sensorabtastvorgang zu erfassen und abzuspeichern. Die Abspeicherung der Unebenheitskoordinaten, die auch als Fehlstellenkoordinaten hinsichtlich der zu beschichtenden Oberfläche bezeichnet werden können, erfolgt in einem Speicher 32. In dem Speicher 32 werden nicht nur die X- und Y-Koordinaten der festgestellten Unebenheiten abgelegt, sondern dazu auch die Nummer der Schicht, die aus dem Speicher 19 für die Baudaten übermittelt werden kann. Es ist aber auch möglich, dass der Sensor 31 z.B. als Ultraschallsensor nach Art eines Echolotsensors oder dergleichen ausgebildet ist.

Stellt der Sensor 31 eine Unebenheit auf der zu beschichtenden Oberfläche insbesondere des Bauteils 14 fest, dann werden die X-, Y- und Z-Koordinaten (Z-Koordinate ist Schichtnummer) in dem Speicher 32 abgelegt und eine Abtragevorrichtung z.B. in Form einer Schleifwalze 40 aktiviert, die an einem durch die Speicher 19, 32 gesteuerten Roboterarm 41 angebracht ist. Mit dieser Schleifwalze 40 erfolgt eine lokale Beaufschlagung und ein lokales Abtragen der festgestellten Unebenheitsstellen, zu denen die Koordinaten im Speicher 32 abgelegt sind. Es ist aber auch möglich, festgestellte Unebenheiten abzuschmelzen, d.h. mit der Strahlung 18 des Lasers 16 zu verdampfen oder mit einer Walze, die ähnlich angebracht ist wie die Schleifwalze 40, in die Oberfläche einzuwalzen (nicht erfindungsgemäß).

Die Abtastung der Oberfläche 13 mit dem Sensor 31 kann vor jedem erneuten Beschichtungsvorgang erfolgen, es ist unter Umständen aber auch ausreichend, nur nach jedem zweiten, dritten oder fünften Beschichtungsvorgang eine Überprüfung vorzunehmen. Die Abtastung kann ferner nur in den Rand- und Extrembereichen eines Bauteils erfolgen, d.h. bei dünnen Rippen und dergleichen, bei denen eine relativ hohe Delaminationsgefahr besteht.

In dem Speicher 32 wird nicht nur abgespeichert, dass eine Unebenheit vorgelegen hat und dass diese abgetragen wurde, sondern es wird auch noch der Abtragevorgang genau protokolliert hinsichtlich der Abtragfläche, der Abtragtiefe und dergleichen, weil daraus eine Aussage getroffen werden kann, welcher Art die Unebenheit ist.

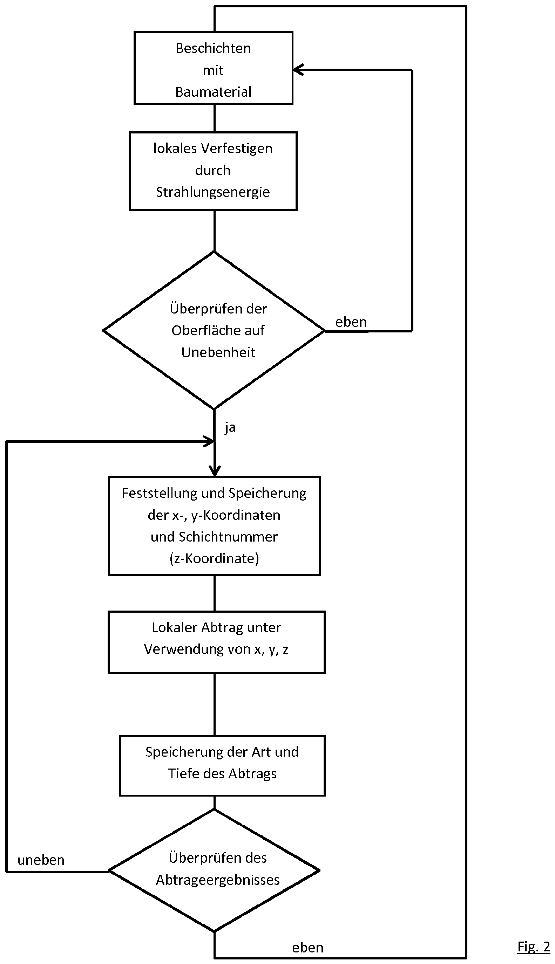

In Figur 2 ist noch einmal nach Art eines Flussdiagramms dargestellt, wie eine Feststellung und Behebung von Schichtoberflächen erfolgt.

In einem ersten Schritt wird eine zu beschichtende Fläche mit Baumaterial beschichtet, was in vorbezeichneter Weise durch den Beschichter 12 und die Beschichterklinge 11 geschehen kann. Dann wird in einem zweiten Schritt durch die Strahlung 18 des Lasers unter Verwendung des Scanners 17 die Schicht gezielt und lokal verfestigt. Sodann wird in einem dritten Schritt durch den Sensor 31 festgestellt, ob die Schicht eben ist. Falls dies bejaht wird, kann erneut gemäß Schritt 1 eine Beschichtung mit Baumaterial erfolgen. Falls Unebenheiten festgestellt werden, werden die XY-Koordinaten und die Schichtnummer festgehalten und abgespeichert. Sodann erfolgt ein lokaler Abtrag unter Verwendung der XY-Koordinaten und sodann eine Speicherung der Art und der Tiefe des Abtrags unter Verwendung der X-, Y- und Z-Koordinaten.

Sodann kann ein erneutes lokales Überprüfen des Abtrageergebnisses erfolgen. Stellt sich heraus, dass die Schicht nach wie vor uneben ist, kann erneut festgehalten werden, wo die Schicht noch uneben ist und wo ein weiterer lokaler Abtrag erfolgen muss. Erweist sich die Schicht hingegen als eben, dann erfolgt ein neuer Schichtauftrag mit Baumaterial gemäß Schritt 1.

Es erscheint noch bedeutungsvoll, dass die Fläche der abtragenden Bearbeitung etwas größer sein kann als die tatsächliche Fläche der Unebenheit, um ein wirklich ebenes und glattes Bearbeitungsergebnis sicherzustellen. Diese tatsächlichen Abtragkoordinaten können beispielsweise in dem Speicher 32 der Vorrichtung festgehalten werden, um später Qualitätsmanagementaussagen treffen zu können.

### BEZUGSZEICHENLISTE

- 1: Vorrichtung
- 2: Gehäuse
- 3: Prozesskammer
- 4: Prozesskammerboden
- 5: Dosierbehälter
- 6: Baukammer
- 7: Träger
- 8: Überlaufbehälter
- 9: Baumaterial
- 10: Dosierkammerboden
- 11: Klinge
- 12: Beschichter
- 13: Oberfläche
- 14: Bauteil
- 15: Bestrahlungseinrichtung
- 16: Laser
- 17: Scanner
- 18: Strahl v. 16
- 19: Speicher
- 20: Prozessor
- 21: Ausgang v. 20

- 31: Sensor
- 32: Speicher

- 40: Schleifwalze
- 41: Roboterarm

## Patentansprüche

1. Verfahren zur Herstellung von dreidimensionalen Bauteilen (14) durch aufeinanderfolgendes Verfestigen von Schichten eines pulverartigen, mittels elektromagnetischer Strahlung (18), insbesondere gebündelter Strahlung wie Laserstrahlung oder Elektronenstrahlung verfestigbaren Baumaterials (9) an den dem jeweiligen Querschnitt des Bauteils (14) entsprechenden Stellen, insbesondere SLM (selective laser melting)- oder SLS (selective laser sintering)-Verfahren, wobei eine Vorrichtung (1) mit einer innerhalb einer Baukammer (6) höhenverlagerbaren Tragevorrichtung (7) zum Tragen des Bauteils (14) vorgesehen wird, mit einer Beschichtungsvorrichtung (12) zum Aufbringen von Schichten des Baumaterials (9) auf die Tragevorrichtung oder eine zuvor gebildete Schicht sowie eine Bestrahlungseinrichtung (15) zum bereichsweisen Bestrahlen von Schichten des Baumaterials (9), um diese zu verfestigen, wobei vor einem erneuten Schichtauftrag ein zu beschichtender Abschnitt der Oberfläche (13) hinsichtlich seiner Ebenheit abgetastet wird und im Falle von einen gewissen Toleranzbereich übersteigenden Unebenheiten diese Unebenheiten abgetragen werden, **dadurch gekennzeichnet, dass** ein zu beschichtender Abschnitt der Oberfläche unter Erfassung von Unebenheitskoordinaten mit einem Sensor abgetastet wird, wobei die lokal ermittelten Unebenheiten unter Verwendung der ermittelten Unebenheitskoordinaten gezielt lokal mechanisch abgetragen werden, wobei ein relativ kleinflächiges Abtrageelement zu einer hochstehenden Schichtstelle geführt und dort der Abtragvorgang vorgenommen wird.

2. Verfahren nach Anspruch 1, **dadurch gekennzeichnet, dass** die Abtastung der zu beschichtenden Oberfläche (13) optisch erfolgt.

3. Verfahren nach Anspruch 1 oder 2, **dadurch gekennzeichnet, dass** die Abtastung der Oberfläche (13) durch ein akustisches Verfahren, insbesondere ein Ultraschallverfahren erfolgt.

4. Verfahren nach einem der vorhergehenden Ansprüche, **dadurch gekennzeichnet, dass** die Abtastung der zu beschichtenden Oberfläche (13) vor jedem Beschichtungsvorgang erfolgt.

5. Verfahren nach einem der vorhergehenden Ansprüche, **dadurch gekennzeichnet, dass** die Abtastung der zu beschichtenden Oberfläche (13) nur in Rand- oder Überhangbereichen des Bauteils erfolgt.

6. Verfahren nach einem der vorhergehenden Ansprüche, **dadurch gekennzeichnet, dass** durch die Abtastung eine Delamination von bereits verfestigten Schichten des Bauteils (14) detektiert wird.

7. Verfahren nach einem der vorhergehenden Ansprüche, **dadurch gekennzeichnet, dass** zwischen den Abtastvorgängen eine Mehrzahl von Beschichtungsvorgängen liegt.

8. Verfahren nach einem der vorhergehenden Ansprüche, **dadurch gekennzeichnet, dass** ein Detektions- und/oder Abtragevorgang hinsichtlich einer als uneben festgestellten und/oder teilabgetragenen Aufbauschicht und hinsichtlich der zugehörigen X- und Y-Koordinaten sowie der Schichtnummer (Z-Koordinate im Bauteil) in einem Qualitätsmanagementprotokoll automatisch gespeichert wird, das zu dem jeweiligen Bauteil (14) erstellt wird.

9. Verfahren nach Anspruch 8, **dadurch gekennzeichnet, dass** neben den X- und Y-Koordinaten auch die Art des Abtrages und/oder die Abtragtiefe automatisch gespeichert wird.

## Claims

1. Method for producing three-dimensional components (14) by successively solidifying layers of a powdery construction material (9), which can be solidified by means of electromagnetic radiation (18), in particular bundled radiation such as laser radiation or electron radiation, at the points corresponding to the relevant cross section of the component (14), in particular selective laser melting (SLM) or selective laser sintering (SLS) methods, wherein a device (1) is provided with a supporting device (7) that is height-adjustable within a construction chamber (6) for supporting the component (14), comprising a coating device (12) for applying layers of the construction material (9) to the supporting device or a previously formed layer, and comprising an irradiation apparatus (15) for irradiating layers of the construction material (9) in regions in order to solidify said layers, wherein a portion of the surface (13) to be coated is scanned for its evenness before another layer is applied and, if there is unevenness that exceeds a certain tolerance range, this unevenness is removed, **characterised in that** a portion of the surface to be coated is scanned using a sensor with unevenness coordinates being recorded, wherein the locally identified unevenness is locally mechanical removed in a targeted manner using the identified unevenness coordinates, wherein a removal element having a relatively small surface area is guided to an upwardly protruding point on the layer and the removal process is carried out here.

2. Method according to claim 1, **characterised in that** the surface (13) to be coated is scanned optically.

3. Method according to claim 1 or 2, **characterised in that** the surface (13) is scanned by means of an acoustic method, in particular an ultrasound method.

4. Method according to any of the preceding claims, **characterised in that** the surface (13) to be coated is scanned before each coating process.

5. Method according to any of the preceding claims, **characterised in that** the surface (13) to be coated is only scanned in edge regions or overhang regions of the component.

6. Method according to any of the preceding claims, **characterised in that** delamination of layers of the component (14) already solidified is detected by means of the scanning.

7. Method according to any of the preceding claims, **characterised in that** there is a plurality of coating processes between the scanning processes.

8. Method according to any of the preceding claims, **characterised in that** a detection process and/or a removal process is automatically stored in a quality-management record, which is compiled for the relevant component (14), with regard to a build-up layer that has been partially removed and/or determined as being uneven and with regard to the associated X and Y coordinates and the layer number (Z coordinate in the component).

9. Method according to claim 8, **characterised in that** the type of removal and/or the removal depth is also automatically stored in addition to the X and Y coordinates.

## Revendications

1. Procédé pour fabriquer des composants (14) tridimensionnels par solidification successive de couches d'un matériau de construction (9) de type pulvérulent pouvant être solidifié au moyen d'un rayonnement (18) électromagnétique, en particulier d'un rayonnement en faisceau tel qu'un rayonnement laser ou un rayonnement d'électrons sur des emplacements correspondant à la section transversale respective du composant (14), en particulier procédé SLM (selective laser melting -fusion sélective par laser) ou SLS (selective laser sintering -frittage sélectif par laser), dans lequel est prévu un dispositif (1) avec un dispositif de support (7) pouvant être déplacé en hauteur à l'intérieur d'un compartiment de construction (6), pour supporter le composant (14), avec un dispositif de revêtement (12) pour appliquer des couches du matériau de construction (9) sur le dispositif de support ou sur une couche obtenue au préalable ainsi qu'un système d'irradiation (15) pour irradier par zones des couches du matériau de construction (9) afin de solidifier celles-ci, dans lequel une portion à revêtir de la surface (13) est sondée quant à sa planéité avant une nouvelle application de couche et dans le cas d'irrégularités dépassant une certaine plage de tolérances, lesdites irrégularités sont enlevées, **caractérisé en ce qu'**une portion à revêtir de la surface est sondée en détectant des coordonnées d'irrégularités avec un capteur, dans lequel les irrégularités localement déterminées sont enlevées mécaniquement de manière ciblée localement en utilisant les coordonnées d'irrégularités déterminées, dans lequel un élément d'enlèvement à surface relativement petite est guidé vers un emplacement de couche placé en hauteur et l'opération d'enlèvement y est réalisée.

2. Procédé selon la revendication 1, **caractérisé en ce que** le sondage de la surface (13) à revêtir est effectué de manière optique.

3. Procédé selon la revendication 1 ou 2, **caractérisé en ce que** le sondage de la surface (13) est effectué par un procédé acoustique, en particulier un procédé à ultrasons.

4. Procédé selon l'une quelconque des revendications précédentes, **caractérisé en ce que** le sondage de la surface (13) à revêtir est effectué avant chaque opération de revêtement.

5. Procédé selon l'une quelconque des revendications précédentes, **caractérisé en ce que** le sondage de la surface (13) à balayer est effectué seulement dans des zones de bord ou en surplomb.

6. Procédé selon l'une quelconque des revendications précédentes, **caractérisé en ce qu'**une délamination de couches déjà solidifiées du composant (14) est détectée par le sondage.

7. Procédé selon l'une quelconque des revendications précédentes, **caractérisé en ce qu'**une multitude d'opérations de revêtement se trouvent entre les opérations de sondage.

8. Procédé selon l'une quelconque des revendications précédentes, **caractérisé en ce qu'**une opération de détection et/ou d'enlèvement est automatiquement mémorisée dans un protocole de gestion de la qualité, qui est créé concernant le composant (14) respectif, quant à une couche de construction constatée comme étant irrégulière et/ou en partie enlevée et quant aux coordonnées X et Y associées ainsi que quant au numéro de couche (coordonnées Z dans le composant).

9. Procédé selon la revendication 8, **caractérisé en ce qu'**outre les coordonnées X et Y, le type de l'enlèvement et/ou la profondeur d'enlèvement également sont mémorisés automatiquement.
